Europäisches Patentamt

European Patent Office

Office européen des brevets

(11) Publication number: **0 225 167**
**B1**

# EUROPEAN PATENT SPECIFICATION

(45) Date of publication of patent specification: **12.07.89**     (51) Int. Cl.⁴: **B 61 G 11/12**

(21) Application number: **86309218.5**

(22) Date of filing: **26.11.86**

(54) **Energy absorbers.**

(30) Priority: **27.11.85 GB 8529148**

(43) Date of publication of application:
**10.06.87 Bulletin 87/24**

(45) Publication of the grant of the patent:
**12.07.89 Bulletin 89/28**

(84) Designated Contracting States:
**AT BE DE ES FR GB IT NL SE**

(56) References cited:
**GB-A- 648 931**
**GB-A- 982 641**
**GB-A-1 448 864**
**US-A-2 038 948**

(73) Proprietor: **OLEO INTERNATIONAL HOLDINGS
LIMITED
Walcote Blackdown
Leamington Spa Warwickshire CV32 6QX (GB)**

(72) Inventor: **Bushnell, John James
15 Orchard Way
Southam Warwickshire VC33 0EG (GB)**
Inventor: **Stephens, Raymond Buckingham
34 Meadow Road
Alcester Warwickshire B49 6BA (GB)**

(74) Representative: **Everitt, Christopher James
Wilders et al
F.J. CLEVELAND & COMPANY 40/43 Chancery
Lane
London WC2A 1JQ (GB)**

Courier Press, Leamington Spa, England.

## Description

This invention relates to energy absorbers of the kind which comprise a cylinder and a hollow plunger slidable in the cylinder, the plunger having its interior divided into a gas containing space and a liquid reservoir by a hollow piston which is slidable in a bore formed by the interior of the hollow plunger the interior of the hollow piston being part of the gas containing space, and the plunger being provided with means whereby the liquid reservoir communicates with a liquid compression chamber formed within the cylinder outside the plunger, liquid displaced from the compression chamber into the reservoir by lengthwise compression of the absorber acting on the hollow piston to displace it and thereby cause compression of gas within the gas containing space such that lengthwise compression of the absorber is resisted by compressed gas within the gas containing space which also provides a recoil force, there being liquid damping means which provide further resistance to compression of the absorber and damp the recoil force under certain conditions of operation. Such absorbers shall be referred to as "an energy absorber of the kind referred to" through the remainder of this specification, and examples of such an absorber are disclosed in GB—A—982,641.

It is desirable to minimize the recoil force in certain forms of energy absorbers of the kind referred to, such as those which are used, for example, on railway vehicles to absorb shock loads transmitted from one vehicle to another during acceleration and deceleration of a train, or during wagon impacts in marshalling yards, see GB—A—982641 for example. This can be done by impeding return liquid flow from the liquid reservoir to the compression chamber but that is difficult and arrangements in current use for doing so are expensive.

GB—A—648931 discloses another form of air/liquid energy absorber which is designed as an air-craft shock absober. It includes a separator piston which, rather than separating the air from the liquid, divides the air space into two chambers which are connected together by a reducing valve which controls air flow through the separator piston. This enables the air space to be inflated from its end remote from the liquid so that the chamber between the separator piston and the liquid constitutes a low pressure chamber of small volume and therefore of high compression ratio, while the other chamber contains air at higher pressure but is of relatively large volume.

Upon compression of the shock absorber, the air in the low pressure chamber is compressed first and provides a relatively easily yielding spring device to afford an easy ride during taxiing whereas, upon landing the pressure in that chamber rises until it is equal to that in the other chamber and a long stroke of the absorber will therefore compress the air in the two chambers together.

According to this invention there is provided an energy absorber of the kind referred to in which the hollow piston is closed and means are provided which allow free gas flow into the interior of the hollow piston from the remainder of the gas containing space but which restrict escape of gas from the interior of the hollow piston into the remainder of the gas containing space so that the rate of recoil of the absorber is controlled by the means that restrict gas escape from within the piston and is dependent on the rate of such gas escape. It should be understood that substantially all the gas within the gas containing space will be compressed into the interior of the hollow piston when the absorber is fully compressed.

Conveniently the gas escape restricting means comprise a valve which cooperates with a seat which is formed on a portion of the interior surface of the hollow piston, there being at least one passage which extends through an end wall of the hollow piston from one mouth in the valve seat to another mouth in that part of the outer surface of the hollow piston that forms part of the surface of the remainder of the gas containing space and the finish of the mating surfaces of the valve and the seat being such as to allow seepage of gas therebetween, the arrangement being such that the valve is unseated by gas flow through the passage or passages into the interior of the hollow piston and is urged to seat by pressure of gas within the interior of the hollow plunger but, when seated, allows controlled escape of gas from that interior of the remainder of the gas containing space by seepage between it and the flat valve seat to the passage or pasasges.

One embodiment of this invention will be described now by way of example with reference to the accompanying drawing, of which:—

Figure 1 is a cutaway perspective view of a buffer capsule in which the present invention is embodied; and

Figure 2 is a longitudinal cross-section of the hollow piston of the buffer capsule shown in figure 1.

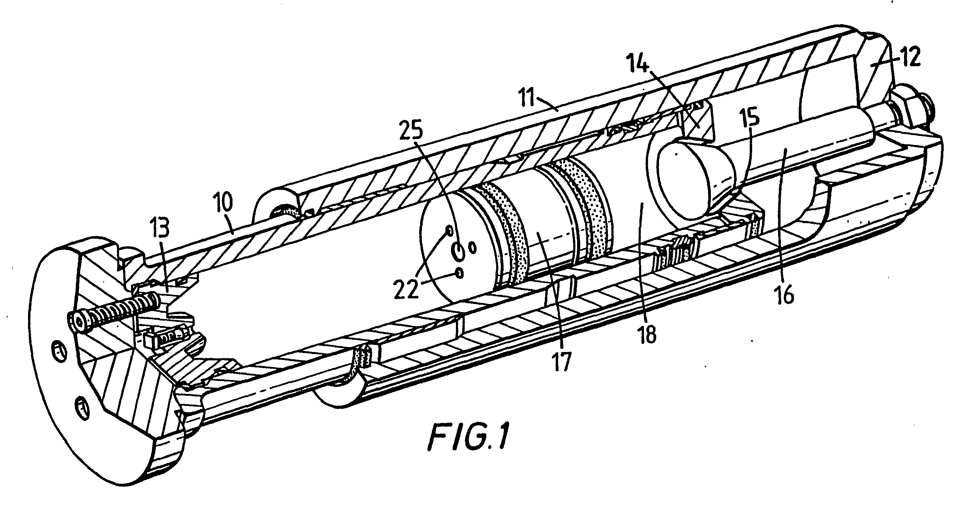

Figure 1 shows a railway buffer capsule comprising a hollow cylindrical plunger 10 slidably mounted in a cylinder 11. The cylinder 11 is closed at its outer end 12. The plunger 10 is closed at its outer end 13 and at its inner end it has an end wall 14 in which is formed a central aperture 15. A profiled metering pin 16 is fixed to the outer closed end wall 12 of the cylinder 11 and extends through the aperture 15.

A floating piston 17 slides un the bore of the plunger 10 and separates a liquid reservoir 18, which is formed within the plunger 10 adjacent the inner plunger end wall 14, from the remainder of the interior of the plunger 10.

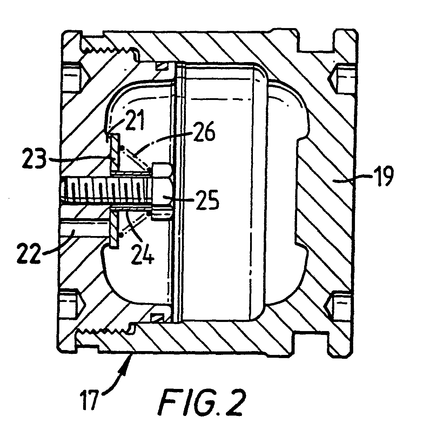

Figure 2 shows that the piston 17 is hollow. One end 19 of the hollow piston 17 is closed and forms a movable wall of the liquid reservoir 18. The opposite end wall of the hollow piston 17 has an inwardly projecting portion 21 which has a flat surface three passages 22, of which only one is shown in Figure 2, extend from a mouth in the flat surface of the inwardly projecting wall portion 21, through the respective end wall of the hollow piston 17 to another mouth in the outer surface of that end wall. A flat annular plate valve 23 is guided by a tubular bush 24 and supported by a set screw 25 which projects into the interior of the hollow piston 17 from a tapped bore formed substantially at the centre of the inwardly projecting wall portion 21. A light spring 26 reacts against the head of the set screw 25 and acts on the valve plate 23 to balance inertial forces resisting seating of the valve plate 23 on the flat surface of the inwardly-projecting wall portion 21. The outside diameter of the valve plate 23 is marginally greater than the outside diameter of the inwardly-projecting wall portion 21 so that a minor peripheral portion of the valve plate 23 overhangs the periphery of the inwardly-projecting wall portion 21.

Neither the flat surface of the inwardly-projecting wall portion 21 nor the cooperating surface of the valve 23 is lapped so that the finish of the mating surfaces of the valve 23 and its seat is such as to allow seepage of gas therebetween when the valve 23 is seated.

The interior of the hollow piston 17 and the remainder of the interior of the plunger 10 between the hollow piston 17 and the outer end wall 13 together comprise a gas containing space which is filled with compressed gas, such as nitrogen, on assembly of the buffer.

Lengthwise compression of the buffer causes movement of the plunger 10 towards the end wall 12 of the cylinder 11 which displaces liquid from the compression chamber between the plunger 10 and the cylinder end wall 12 into the reservoir 18 within the plunger 10 through the central aperture 15 and around the metering pin 16. Such liquid entering the reservoir 18 acts on the end wall 19 to exert a thrust thereon whereby the hollow piston 17 is displaced towards the outer plunger end wall 13 so that gas between the piston 17 and the end wall 13 is forced into the interior of the piston 17 through the passages 22 passed the first valve plate 23.

The valve plate 23 is urged to seat by the pressure of gas within the interior of the piston 17 when lengthwise compression of the buffer stops. Compressed gas seeps out of the interior of the piston 17 between the valve plate 23 and the flat seat formed by the end surface of inwardly-projecting wall portion 21, and through the passages 22 at a slow rate which is controlled by the valve plate 23. Hence the build-up of gas pressure between the piston 17 and the end wall 13 is slow so that the recoil force generated by the rate of increase of that gas pressure is also slow.

## Claims

1. An energy absorber comprising a cylinder (11) and a hollow plunger (10) slidable in the cylinder (11), the plunger (10) having the interior divided into a gas containing space and a liquid reservoir (18) by a hollow piston (17) which is slidable in a bore formed by the interior of the hollow plunger (10), the interior of the hollow piston (17) being part of the gas containing space, and the plunger (10), being provided with means whereby the liquid reservoir (18) communicates with a liquid compression chamber formed within the cylinder (11) outside the plunger (10), liquid displaced from the compression chamber into the reservoir (18) by lengthwise compression of the absorber acting on the hollow piston (17) to displace it and thereby cause compression of gas within the gas containing space such that lengthwise compression of the absorber is resisted by compressed gas within the gas containing space which also provides a recoil force, there being liquid damping means (15 and 16) which provide further resistance to compression of the absorber and damp the recoil force under certain conditions of operation, characterized in that the hollow piston (17) is closed and means (22 and 23) are provided which allow free gas flow into the interior of the hollow piston (17) from the remainder of the gas containing space but which restrict escape of gas from the interior of the hollow piston (17) into the remainder of the gas containing space so that the rate of recoil of the absorber is controlled by the means (23) that restrict gas escape from within the piston and is dependent on the rate of such gas escape.

2. An energy absorber according to claim 1, wherein the gas escape restricting means comprise a valve (23) which cooperates with a seat which is formed on a portion (21) of the interior surface of the hollow piston (17), there being at least one passage (22) which extends through an end wall of the hollow piston (17) from one mouth in the valve seat to another mouth in that part of the outer surface of the hollow piston (17) that forms part of the surface of the remainder of the gas containing space, means being provided which allow the restricted escape of gas from the interior of the hollow piston (17) when the valve (23) is seated, the arrangement being such that the valve (23) is unseated by gas flow through the passage (22) or passages into the interior of the hollow piston (17) and is urged to seat by pressure of gas within the interior of the hollow piston (17), a controlled escape of gas from that interior to the remainder of the gas containing space being allowed when the valve (23) is seated.

3. An energy absorber according to claim 2, wherein the finish of the mating surfaces of the valve (23) and the seat is such as to allow seepage of gas therebetween so that the controlled escape of gas that is allowed when the valve (23) is seated is by seepage between the valve (23) and the flat valve seat to the passage (22) or passages.

4. An energy absorber according to claim 2 or claim 3, wherein the valve (23) has a minor peripheral portion which overhangs the periphery of the seat.

## Patentansprüche

1. Energieabsorber, umfassend einen Zylinder (11) und einen in dem Zylinder (11) gleitend geführten hohlen Plungerkolben (10), dessen Innenraum durch einen Hohlkolben (17), der in einer von dem Innenraum des hohlen Plungerkolbens (10) gebildeten Bohrung gleitend geführt ist, in einen gasgefüllten Raum und ein Flüssigkeitsreservoir (18) unterteilt ist, wobei der Innenraum des Hohlkolbens (17) Teil des gasgefüllten Raumes ist und der Plungerkolben (10) mit Mitteln versehen ist, durch die das Flüssigkeitsreservoir (18) mit einer Flüssigkeits-Druckkammer verbunden ist, die sich innerhalb des Zylinders (11) außerhalb des Plungerkolbens (10) befindet, wobei ferner durch längsweise Kompression des Absorbers von der Druckkammer in das Reservoir (18) bewegte Flüssigkeit auf den Hohlkolben (17) einwirkt, um ihn zu verschieben und dadurch eine Komperssion von Gas innerhalb des gasgefüllten Raumes zu bewirken, so daß der längsweisen Kompression des Absorbers durch das komprimierte Gas in dem gasgefüllten Raum ein Widerstand entgegengesetzt und auch eine Rückstellkraft erzeugt wird, und wobei eine Flüssigkeits-Dämpfungseinrichtung (15, 16) vorhanden ist, die der Kompression des Absorbers einen weiteren Widerstand entgegensetzt und unter bestimmten Betriebsbedingungen die Rückstellkraft dämpft, dadurch gekennzeichnet, daß der Hohlkolben (17) geschlossen ist, und daß Mittel (22 und 23) vorgesehen sind, die einen freien Gasfluß in den Innerraum des Hohlkolbens (17) aus dem restlichen gasgefüllten Raum zulassen, die aber ein Austreten von Gas aus dem Innenraum des Hohlkolbens (17) in den restlichen gasgefüllten Raum begrenzen, so daß die Geschwindigkeit der Rückstellung des Absorbers durch die den Gasaustritt aus dem Kolbeninneren beschränkenden Mittel (23) kontrolliert wird und von dieser Gasaustrittsrate abhängt.

2. Energieabsorber nach Anspruch 1, dadurch gekennzeichnet, daß die den Gasaustritt beschränkenden Mittel ein Ventil (23) umfassen, das mit einem Ventilsitz zusammenwirkt, der an einem Abschnitt (21) der Innerfläche des Hohlkolbens (17) ausgebildet ist, daß mindestens ein Kanal (22) vorhanden ist, der sich durch eine Endwand des Hohlkolbens (17) von einer Mündung in den Ventilsitz zu einer weiteren Mündung in dem Teil der Außenfläche des Hohlkolbens (17) erstreckt, der einen Teil der Oberfläche des restlichen gasgefüllten Raumes bildet, und daß Mittel vorgesehen sind, die den beschränkten Gasaustritt aus dem Innenraum des Hohlkolbens (17) erlauben, wenn das Ventil (23) auf dem Ventilsitz aufliegt, wobei die Anordnung so getroffen ist, daß das Ventil (23) aufgrund des Gasflusses durch den Kanal (22) oder die Kanäle in den Innenraum des Hohlkolbens (17) vom Ventilsitz abhebt und gegen den Ventilsitz durch den Gasdruck im Innenraum des Hohlkolbens (17) angedrückt wird, und wobei ein kontrollierter Austritt von Gas aus diesem Innenraum in den restlichen gasgefüllten Raum möglich ist, wenn das Ventil (23) auf dem Ventilsitz aufliegt.

3. Energieabsorber nach Anspruch 2, dadurch gekennzeichnet, daß die Oberflächengüte der miteinander zusammenwirkenden Flächen des Ventils (23) und des Ventilsitzes so ist, daß ein Gasleckstrom zwischen ihnen ermöglicht ird, so daß der kontrollierte Gasaustritt, der beim Aufliegen des Ventils (23) auf dem Ventilsitz möglich ist, durch einen Leckstrom zwischen dem Ventil (23) und dem flachen Ventilsitz zum Kanal oder zu den Kanälen erfolgt.

4. Energieabsorber nach Anspruch 3, dadurch gekennzeichnet, daß das Ventil (23) einen kleinen Umfangsabschnitt hat, der den Umfang des Ventilsitzes überragt.

**Revendications**

1. Un absorbeur d'énergie comprenant un cylindre (11) et un plongeur creux (10) pouvant coulisser dans le cylindre (11), le plongeur (10) ayant son volume intérieur divisé en un espace contenant un gaz et un réservoir de liquide (18) par un piston creux (17), qui peut coulisser dans un alésage formé à l'intérieur du plongeur creux (10), l'intérieur du piston creux (17) faisant partie de l'espace contenant un gaz et le plongeur (10) étant pourvu de moyens permettant une communication du réservoir de liquide (18) avec une chambre de compression de liquide formée dans le cylindre (11) sur le côté extérieur du plongeur (10), du liquide déplacé de la chambre de compression dans le réservoir (10) par une compression longitudinale de l'absorbeur agissant sur le piston creux (17) afin de le déplacer et de produire ainsi une compression de gaz à l'intérieur de l'espace contenant un gaz de telle sorte qu'une compression longitudinale de l'absorbeur soit contrebalancée par du gaz comprimé se trouvant dans l'espace contenant le gaz, qui produit également une force de rappel, avec prévision de moyens amortisseurs à liquide (15 et 16) qui opposent une autre résistance à une compression de l'absorbeur et qui amortissent la force de rappel dans certaines conditions de fonctionnement, caractérisé en ce que le piston creux (17) est fermé et il est prévu des moyens (22 et 23) qui permettent un libre écoulement de gaz vers l'intérieur du piston creux (17) à partir du reste de l'espace contenant un gaz mais qui limitent un échappement du gaz à partir de l'intérieur du piston creux (17) jusque dans le reste de l'espace contenant un gaz de telle sorte que la vitesse de rappel de l'absorbeur soit commandée par le moyen (23) qui limite l'échappement de gaz à partir de l'intérieur du piston et soit fonction de le vitesse d'échappement dudit gaz.

2. Un absorbeur d'énergie selon la revendication 1, caractérisé en ce que le moyen de limitation d'échappement de gaz comprend une soupape (23) qui coopère avec un siège qui est formé sur une partie (21) de la surface intérieure du piston creux (17), au moins un passage (22) étant prévu de façon à traverser une paroi extrême du piston creux (17) depuis une embouchure prévue dans le siège de soupape jusqu'à une autre embouchure prévue dans la partie de la surface extérieure du piston creux (17) qui forme une partie de la surface du reste de l'espace contenant un gaz, un moyen étant prévu de façon à permettre l'échappement limité de gaz à partir de l'intérieur du piston creux (17) quand la soupape (23) est appliquée contre son siège, l'agencement étant tel que la soupape (23) soit écartée de son siège par un écoulement de gaz dans le passage (22) ou bien dans les passages débouchant à l'intérieur de piston creux (17) et qu'elle soit appliquée contre son siège par la pression d'un gaz se trouvant à l'intérieur du piston creux (17), un échappement contrôlé de gaz depuis ce volume intérieur du piston creux jusque dans le reste de l'espace contenant un gaz étant autorisé quand la soupape (23) est appliquée contre son siège.

3. Un absorbeur d'énergie selon la revendication 2, caractérisé en ce que la finition des surfaces correspondantes de lu soupape (23) et de son siège est telle qu'elle permette une fuite de gaz entre lesdites surfaces de telle sorte que l'échappement contrôlé de gaz qui est autorisé quand la soupape (23) est appliquée contre son siège s'effectue par une fuite entre la soupape (23) et le siège plat de cette soupape en direction du passage (22) ou des passages.

4. Un absorbeur d'énergie selon la revendication 2 ou la revendication 3, caractérisé en ce que la soupape (23) comporte une petite partie périphérique qui surplombe la périphérie du siège.

*FIG.1*

FIG.2